# EUROPÄISCHE PATENTSCHRIFT

(11) **EP 4 193 084 B1**
(45) Veröffentlichungstag und Bekanntmachung des Hinweises auf die Patenterteilung: **04.10.2023**
(21) Anmeldenummer: 21797988.9
(22) Anmeldetag: 18.10.2021
(51) Int. Cl.: F16K 37/00, F16K 1/22, G09F 9/35

(54) **VERFAHREN ZUR ANZEIGE EINER STELLPOSITION EINES STELLANTRIEBS, ANZEIGEEINHEIT FÜR EINEN STELLANTRIEB UND STELLANTRIEB**
METHOD FOR DISPLAYING AN ACTUATING POSITION OF AN ACTUATING DRIVE, DISPLAY UNIT FOR AN ACTUATING DRIVE, AND ACTUATING DRIVE
PROCÉDÉ D'AFFICHAGE D'UNE POSITION D'ACTIONNEMENT D'UN ENTRAÎNEMENT D'ACTIONNEMENT, UNITÉ D'AFFICHAGE POUR UN ENTRAÎNEMENT D'ACTIONNEMENT ET ENTRAÎNEMENT D'ACTIONNEMENT

(30) Priorität: 27.10.2020 DE 102020128234
(43) Veröffentlichungstag der Anmeldung: 14.06.2023
(73) Patentinhaber: AUMA Riester GmbH & Co. KG, 79379 Müllheim (DE)
(72) Erfinder: BRUCH, Dennis, 57482 Wenden (DE); MALUS, Peter, 79379 Müllheim (DE); BECHER, Jürgen, 79379 Müllheim (DE)
(74) Vertreter: Mertzlufft-Paufler, Cornelius
(86) Internationale Anmeldenummer: PCT/EP2021/078810
(87) Internationale Veröffentlichungsnummer: WO 2022/089978

(56) Entgegenhaltungen:
- EP-A1- 2 886 920
- WO-A1-2019/168295
- JP-A- 2001 271 962
- JP-A- 2010 039 715

## Beschreibung

Die Erfindung betrifft ein Verfahren zur Anzeige einer Stellposition eines Stellantriebs, bei dem ein grafisches Element an einer Anzeigeeinheit korrespondierend zur Stellposition angezeigt wird.

Die Erfindung betrifft weiter eine Anzeigeeinheit für einen Stellantrieb und einen korrespondierenden Stellantrieb.

Derartige Verfahren und Anzeigeeinheiten sind bei Stellantrieben bekannt und dienen dazu, die momentane Stellung einer Armatur, die von dem Stellantrieb betätigt wird, anzuzeigen. Hierzu sind lineare Balken vorgeschlagen worden, deren Füllungsgrad eine fortschreitende Schließung oder Öffnung einer Armatur anzeigt.

Aus der WO 2019/168295 A1 ist ein Ventil mit einem Öffnungs- und Schließkontrollsystem bekannt, wobei ein in einem flüssigkeitsdurchströmten Rohr installiertes Ventil auf einem externen tragbaren Terminal angezeigt wird, wobei ein Benutzer den Öffnungs- und Schließzustand des Ventils leicht überprüfen kann.

Aus der EP 2 886 920 A1 ist eine Ventilvorrichtung bekannt, welche einen visuellen Anzeigemechanismus zur Anzeige einer Ventilposition aufweist, wobei der Anzeigemechanismus nichtinvasiv ist. Die Anzeige der Ventilposition kann mit einer Lichtvorrichtung verknüpft werden. Der Anzeigemechanismus zur Positionsbestimmung des Ventils kann an ein Schließnachweismodul weitergeleitet werden.

Aus der JP 2010 039715 A ist eine Ventilsteuervorrichtung zur Steuerung eines Ventils in einer petrochemischen Anlage, beispielsweise einer FCC-Anlage oder einer RFCC-Anlage, bekannt.

Aus der JP 2001 271962 A ist eine weitere Ventilsteuervorrichtung bekannt, welche aus der Ferne den Zustandsstatus eines Stellantriebs zur Einstellung der Ventilöffnung und Ventilschließung per Internetkommunikation abfragen kann und wobei eine Einstellung aus der Ferne durchgeführt werden kann.

Der Erfindung liegt die Aufgabe zugrunde, die Bedieneigenschaften eines Stellantriebs zu verbessern.

Zur Lösung der genannten Aufgabe sind erfindungsgemäß die Merkmale des Anspruchs 1 vorgesehen. Insbesondere wird somit zur Lösung der genannten Aufgabe bei einem Verfahren der eingangs beschriebenen Art erfindungsgemäß vorgeschlagen, dass das grafische Element zur Anzeige der Stellposition um eine Achse gedreht angezeigt wird. Somit ist eine Anzeigemöglichkeit geschaffen, die mit einem minimalen Platzbedarf an einer Anzeigeeinheit auskommt. Auch ist eine momentane Stellung eines angeschlossenen Ventils einer Armatur einfach erfassbar, da eine Drehbewegung natürlicher erscheint als eine lineare Darstellung. Es sind auch durch weitere, ortsfeste und zeitlich konstante Markierungen die Offenstellung oder Offenposition und die Schließstellung oder Schließposition einfach erfassbar und darstellbar.

Erfindungsgemäß ist vorgesehen, dass das grafische Element vor der Anzeige in einen flüchtigen Speicher geladen wird. Somit ist das grafische Element einfach verarbeitbar, um die momentane Stellposition anzuzeigen. Außerdem müssen nicht für jede Position grafische Elemente im Speicher gehalten werden, um eine Stellposition wiederzugeben.

Hierbei ist vorgesehen, dass im flüchtigen Speicher eine gedrehte Position des grafischen Elements korrespondierend zur Stellposition erzeugt wird. Somit ist eine Drehung des grafischen Elements mit einfachen Routinen, die eine möglichst geringe Rechenkapazität erfordern, erreichbar.

Bei einer vorteilhaften Ausgestaltung kann vorgesehen sein, dass die Anzeige an einem Flüssigkristallbildschirm ausgeführt wird. Flüssigkristallbildschirme haben den Vorteil eines besonders großen Temperaturbereichs für einen ordnungsgemäßen Betriebs.

Bei einer vorteilhaften Ausgestaltung kann vorgesehen sein, dass ein verfügbarer Stellweg auf einen Drehwinkel von 90° abgebildet wird. Mehrdeutigkeiten, die sich ergeben können, wenn das grafische Element bei einer Verstellung entlang des verfügbaren Stellwegs mehrmals dieselbe oder eine ununterscheidbare Position einnimmt, sind vermeidbar.

Bei einer vorteilhaften Ausgestaltung kann vorgesehen sein, dass das grafische Element eine 180°-Symmetrie aufweist. Somit ist eine Redundanz geschaffen, die sich bei einer Umkehr des Richtungssinns einer Schließbewegung einer angeschlossenen Armatur vorteilhaft einsetzen lässt. Hier ist es möglich, einem Drehwinkel des grafischen Elements wahlweise die Funktion einer Endlage oder einer Anfangslage bei einer Schließbewegung bzw. einer Öffnungsbewegung zu geben, so dass für den Betrachter die Offenlage und die Schließlage an demselben Drehwinkel verbleiben können, auch wenn sich der Drehsinn der einzelnen Bewegungen umkehrt.

Bei einer vorteilhaften Ausgestaltung kann vorgesehen sein, dass in Abhängigkeit einer Kennzeichnung von Endlagen des Stellwegs als geschlossene oder offene Ventilstellung die Anzeige automatisch mit einem Offset von 90° oder mit einem umgekehrten Drehsinn des grafischen Elements erfolgt. Somit ist der Stellantrieb an unterschiedlichen Armaturen mit gegenläufigem Schließverhalten anschließbar, ohne dass sich ein Betrachter der Anzeige umgewöhnen muss.

Diese Ausgestaltung ist vorteilhaft kombinierbar mit einer Abbildung des verfügbaren Stellwegs auf 90° Drehwinkel am grafischen Element. Von Vorteil ist dabei, dass die benachbarten 90° Drehwinkel für eine gegenläufige Schließbewegung nutzbar sind.

Alternativ oder zusätzlich ist diese Ausgestaltung vorteilhaft kombinierbar mit einer 180°-Symmetrie des grafischen Elements. Somit ist eine Stellung des grafischen Elements bei 0° von derjenigen bei 180° ununterscheidbar und kann zur Anzeige eines Zustands der Armatur unabhängig von der Orientierung der Schließrichtung verwendet werden.

Besonders günstig ist es, wenn die zwei zuvor genannten Ausgestaltungen miteinander kombiniert werden. Somit ist es möglich, eine 0° Stellung und eine 180° Stellung als Offenstellungen zu definieren, die je nach Drehsinn der angeschlossenen Armatur gewählt werden, wobei ein Benutzer keinen Unterschied erkennen kann, ob das grafische Element in der 0° Stellung ist oder in der 180° Stellung. Ebenso ist es möglich, eine 90° Stellung und eine 270° Stellung als Schließstellungen zu definieren, die je nach Drehsinn der angeschlossenen Armatur gewählt werden, wobei ein Benutzer keinen Unterschied erkennen kann, ob das grafische Element in der 90° Stellung ist oder in der 270° Stellung.

Bei einer vorteilhaften Ausgestaltung kann vorgesehen sein, dass ein weiteres grafisches Element angezeigt wird, mit dem eine Bewegung über eine Endlage des Stellwegs hinaus anzeigbar ist. Somit ist eine zusätzliche Information über den tatsächlichen Zustand der Armatur anzeigbar.

Hierbei kann vorgesehen sein, dass die Bewegung mit einer abweichenden Auflösung anzeigbar ist. Die Auflösung kann hierbei gröber sein, um ein Überschreiten (z.B. aufgrund von Massenträgheit oder Nachlauf) deutlich wahrnehmbar anzeigen zu können.

Hierbei kann vorgesehen sein, dass die Bewegung als ein momentanes Drehmoment des Stellantriebs anzeigbar ist. Somit kann ein Überschreiten indirekt anzeigbar sein, indem ein Überschreiten einer Beaufschlagung, die über eine elastische Deformation zu einem Überschreiten einer Endlage führt, anzeigbar ist.

Alternativ oder zusätzlich sind zur Lösung der genannten Aufgabe erfindungsgemäß die Merkmale des nebengeordneten, auf eine Anzeigeeinheit für einen Stellantrieb gerichteten Anspruchs vorgesehen. Insbesondere wird somit zur Lösung der genannten Aufgabe bei einer Anzeigeeinheit der eingangs beschriebenen Art erfindungsgemäß vorgeschlagen, dass Mittel zur Ausführung eines erfindungsgemäßen Verfahrens, insbesondere wie zuvor beschrieben oder nach einem der auf ein Verfahren gerichteten Ansprüche, ausgebildet sind.

Bei einer vorteilhaften Ausgestaltung kann die Anzeigeeinheit weiter gekennzeichnet sein durch einen Mikroprozessor und einen flüchtigen Speicher, wobei der Mikroprozessor zur Berechnung eines gedrehten Bildes eines grafischen Elements in Abhängigkeit von einer momentanen Stellposition des Stellantriebs und zur Bereitstellung des gedrehten grafischen Elements in dem flüchtigen Speicher, insbesondere für eine Anzeige an der Anzeigeeinheit, eingerichtet ist.

Eine bevorzugte Anwendung der Erfindung sieht einen Stellantrieb mit einer erfindungsgemäßen Anzeigeeinheit für einen Stellantrieb, insbesondere wie zuvor beschrieben oder nach einem der auf eine Anzeigeeinheit für einen Stellantrieb gerichteten Ansprüche, und/oder mit Mitteln zur Ausführung eines erfindungsgemäßen Verfahrens, insbesondere wie zuvor beschrieben oder nach einem der auf ein Verfahren gerichteten Ansprüche, vor.

Die Erfindung wird nun anhand eines Ausführungsbeispiels näher beschrieben, ist jedoch nicht auf das Ausführungsbeispiel beschränkt. Weitere Ausführungsbeispiele ergeben sich durch Kombination der Merkmale einzelner oder mehrerer Ansprüche untereinander und/oder mit einzelnen oder mehreren Merkmalen des Ausführungsbeispiels.

Es zeigt:
- Fig. 1: eine erfindungsgemäße Anzeigeeinheit in stark vereinfachter Darstellung zur Erläuterung der Erfindung,
- Fig. 2: vier unterschiedliche Zustände des linken Symbols in Fig. 1,
- Fig. 3: fünf unterschiedliche Zustände des rechten Symbols in Fig. 1,
- Fig. 4: sechs unterschiedliche Zustände des mittleren Symbols in Fig. 1,
- Fig. 5: einen stark vereinfachten Programmablaufplan für das erfindungsgemäße Verfahren und
- Fig. 6: einen Stellantrieb mit einer angeschlossenen Armatur in stark schematisierter Darstellung.

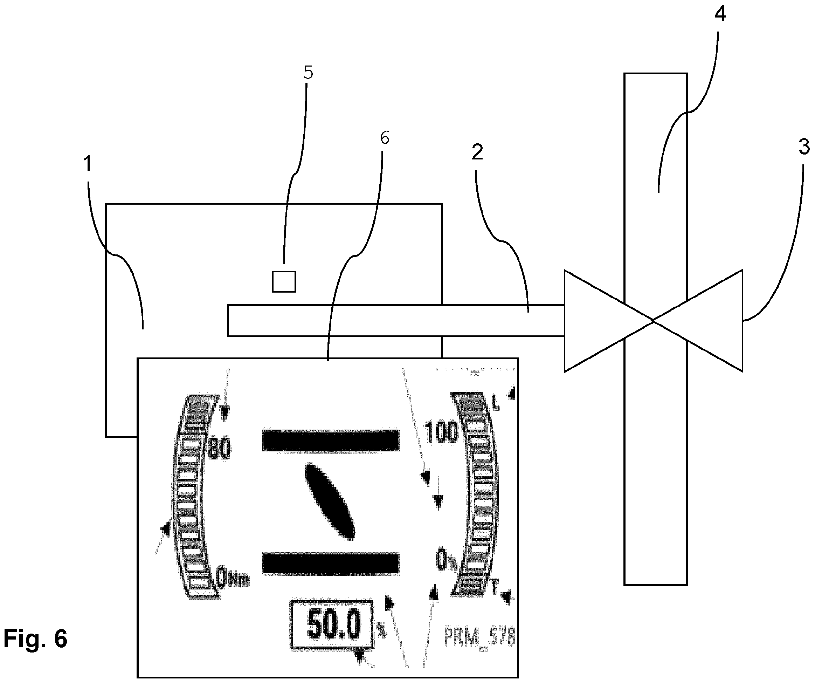

Fig. 6 zeigt eine stark schematisierte Darstellung eines Stellantriebs 1. Der Stellantrieb 1 hat eine motorisch angetriebene Abtriebswelle 2, an der in an sich bekannter Weise ein Ventil 3 einer (nicht weiter dargestellten) Armatur angeschlossene ist. Das Ventil 3 ist zwischen einer Offenstellung, in der ein Rohr 4 fluidisch leitend ist, und einer Schließstellung, in der das Rohr 4 fluidisch sperrt, durch Betätigung der Abtriebswelle 2 verstellbar.

Über einen Sensor 5, beispielsweise einen Geber, ist eine Drehposition der Abtriebswelle 2 erfassbar, als Absolutwert und/oder als Inkrementalwert.

Der Stellantrieb 1 hat eine Anzeigeeinheit 6, deren Funktionalität im Folgenden näher beschrieben wird.

Die Anzeigeeinheit 6 ist hierbei als FlüssigkristallBildschirm (LCD) ausgebildet.

Bei weiteren Ausführungsbeispielen wirkt die Anzeigeeinheit 6 mit dem Stellantrieb 1 zusammen, ist von diesem jedoch separat ausgebildet.

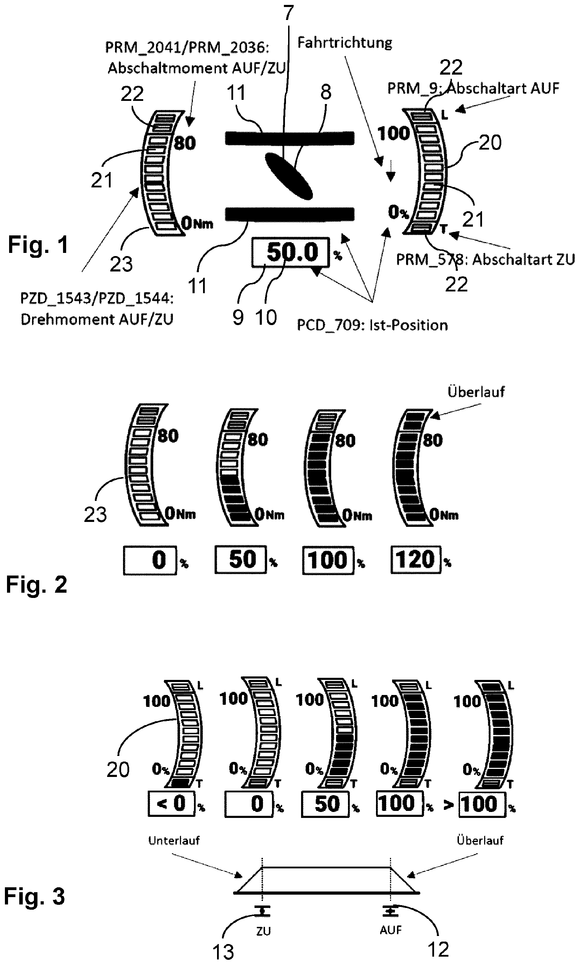

Fig. 1 zeigt einen möglichen Zustand der Anzeigeinheit 6 aus Fig. 6.

Eine grafisches Element 7 ist um eine (virtuelle) Achse 8 drehbar, um eine Momentanposition der Abtriebswelle 4 bzw. des Ventils 3 anzuzeigen. Hierbei ist die Anzeige an der Anzeigeeinheit 6 mit dem Sensor 5 gekoppelt.

In einem numerischen Fenster 9 wird ein zugehöriger numerischer Wert 10 der Stellposition, hier in Prozent des bis zur Schließposition bereits zurückgelegten Weges, angezeigt.

Ortsfeste Markierungen 11, die sich beidseits des drehbaren grafischen Elements 7 erstrecken, deuten die Lages des Rohres 4 an, während das grafische Element 7 die Stellung des Ventils 3 einfach und unmittelbar erfassbar darstellt.

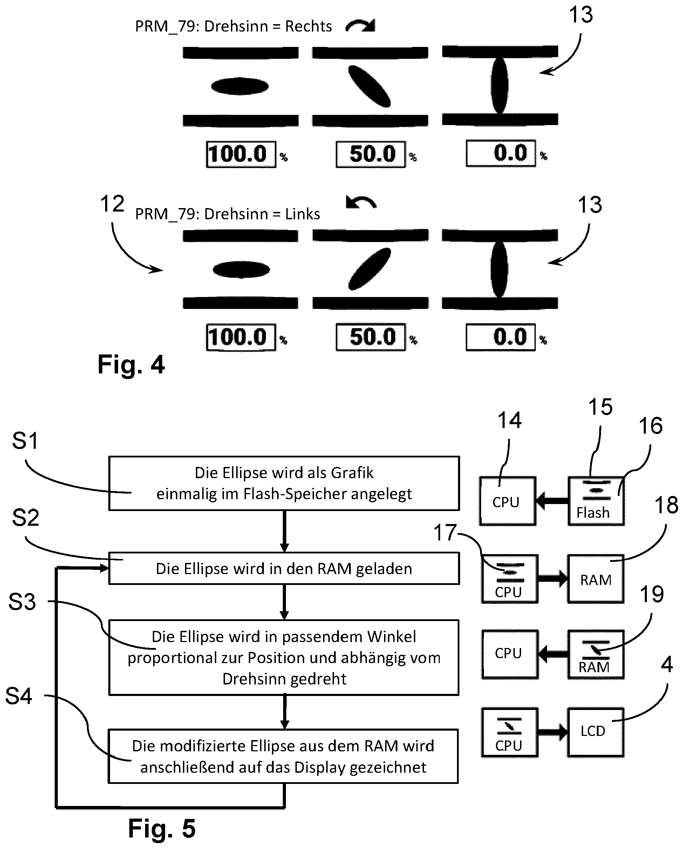

Fig. 4 zeigt unterschiedliche Stellposition des grafischen Elements 7 zwischen einer Offenposition 12 (links oben) und einer Schließposition 13 (rechts oben). Das grafische Element 7 wird hierbei im Uhrzeigersinn gedreht.

Bei der Inbetriebnahme des Stellantriebs 1 wurde mithilfe des Sensors 5 festgelegt, wo die Offenstellung 12 und die Schließstellung 13 liegt. Hieraus ergibt sich, in welchem Richtungssinn sich das grafische Element 7 drehen muss, um von der Offenstellung 12 zu der Schließstellung 13 zu gelangen.

Die untere Zeile in Figur 4 stellt die umgekehrte Bewegung von der Schließstellung 13 in die Offenstellung 12 dar. Der Drehsinn der Bewegung des grafischen Elements 7 ist umgekehrt.

Ist das Ventil 3 dagegen spiegelverkehrt aufgebaut, müssen die Offenstellung 12 und die Schließstellung 13 dagegen an der Abtriebswelle 4 ihre Position tauschen.

Damit die Offenstellung 12 und die Schließstellung 13 unverändert, insbesondere relativ zu den Markierungen 11, bleiben können, schaltet die Anzeigeeinheit 6 um, so dass sich das grafische Element 7 entgegen dem Uhrzeigersinn dreht, um von der Offenstellung 12 in die Schließstellung 13 zu kommen.

Offenstellung 12 und Schließstellung 13 werden hierbei um 90° zueinander gedreht dargestellt, indem der verfügbare Stellweg zwischen den Endlagen auf einen Winkelbereich von 90° abgebildet wird.

Hier ermöglicht eine Drehung zwischen der Offenstellung 12 und der Schießstellung 13 um 90° und die 180°-Drehsymmetrie (in Bezug auf die Achse 8) des grafischen Elements, dass die Endpositionen der Stellbewegung gleichbleiben können und die Koppelung der Stellung des grafischen Elements 7 an die Bewegung der Abtriebswelle 4 unverändert bleiben kann.

In Figur 4, oben rechts, dreht sich in diesem Fall das grafische Element 7 von der Ausgangsposition, jetzt die Schließstellung 13, im Uhrzeigersinn weiter, bis die (um 180° gedrehte) Stellung links oben, die Offenstellung, eingenommen wird.

Mit anderen Worten wird auf die Kopplung zwischen der Abtriebswelle 4 und dem grafischen Element 7 ein Offset von 90° aufgeschlagen (oder abgezogen).

Dieser Offset kann automatisch anhand der Position von Offenstellung 12 und Schließstellung 13 und/oder einer Laufrichtung zwischen diesen bei der Inbetriebnahme ermittelt werden.

Fig. 5 zeigt in stark vereinfachter Form, wie die Drehung des grafischen Elements 7 ausgeführt wird.

Ein Mikroprozessor 14 lädt in einem Initialisierungsschritt S1 eine Darstellung 15 des grafischen Elements 7 aus einen nichtflüchtigen Speicher 16, beispielsweise einen Flash-Speicher.

In einem Anfangsschritt S2 wird die aktuelle Darstellung 17 des grafischen Elements 7, in einen flüchtigen Speicher 18, hier einem RAM geladen.

In einem Berechnungsschritt S3 wird das grafische Element 7 mithilfe von Standardbefehlen im flüchtigen Speicher 18 bearbeitet, bis eine gedrehte Darstellung 19 errechnet ist. Der Drehwinkel ergibt sich hierbei aus Messdaten, die der Mikroprozessor 14 vom Sensor 5 empfängt.

In einem Darstellungsschritt S4 steuert der Mikroprozessor 14 (oder ein weiterer grafischer Prozessor) die Anzeigeeinheit so an, dass - bevorzugt in einem definierten Bereich - das grafische Element 7 in der Position, in der es im flüchtigen Speicher 18 vorgehalten ist, angezeigt wird.

Anschließend wird der Ablauf in Schritt S1 fortgesetzt.

Figur 1 zeigt ein weiteres grafisches Element 20, mit dem eine Bewegung über eine Endlage (T=Schließstellung 13 mit - beispielhafter - Abschaltart Drehmoment, L=Offenstellung 12 mit - beispielhafter - Abschaltart Stellposition) des Stellwegs hinaus anzeigbar ist. Hier wird korrespondierend zu dem Stellweg eine Anzahl von Teilmarkierungen 21 eingefärbt.

Dies geschieht dadurch, dass außerhalb des (bei Inbetriebnahme festgelegten) Stellwegs Teilungsmarkierungen 22 mit gröberer Auflösung ausgebildet sind. Bei auch nur minimalem Überschreiten der Endlagen (bei dem sich die Abtriebswelle 4 geringfügig elastisch verformt und Spiele in Armatur, Kupplungen und Getrieben ausgenutzt werden können) wird das benachbarte Anzeigefeld aktiviert, unabhängig davon, um wieviel die Endlage überschritten wird.

Figur 3 zeigt eine volle Bewegung aus einem Unterlauf (links), also einem Unterschreiten einer untersten Stellposition, über die Schließstellung 13 (2. Bild von links) und die Offenstellung 12 (2. Bild von rechts) in einen Überlauf (rechts).

Ein weiteres grafisches Element 23 kann alternativ ein Überschreiten des max. Abschaltmoments anzeigen. Hier wird - in Abhängigkeit von einem entsprechenden Sensor - das Drehmoment auf der Abtriebswelle 4 angezeigt, indem eine korrespondierende Anzahl von Teilmarkierungen eingefärbt wird.

Bei Überschreiten eines Schwellwertes (hier zum Beispiel 80 Nm) werden gesonderte Teilmarkierungen 22 eingefärbt, so dass der Nutzer erkennt, dass hier mit einem Moment gegen die Endlage gefahren wird.

Figur 2 zeigt eine (drehmomentlose) Ruhestellung (links), das Verfahren entlang des Stellwegs mit einem geringen Drehmoment (2. Bild von links), das Erreichen des max. Abschaltmoments (2. Bild von rechts) und das Überschreiten des Abschaltmoments (rechts).

Die Erfindung betrifft somit eine Anzeigeeinheit 6, die zur Anzeige einer momentanen Stellposition eines mit einem Ventil 3 einer Armatur gekoppelten Stellantriebs 1 mittels eines veränderlichen grafischen Elements 7 eingerichtet ist, wobei das grafische Element 7 in Reaktion auf einen Sensor 5, mit dem die momentane Stellposition ermittelt wird, um einen entsprechenden Drehwinkel gedreht dargestellt wird.

### Bezugszeichenliste

### Bezugszeichenliste

- 1: Stellantrieb
- 2: Abtriebswelle
- 3: Ventil
- 4: Rohr
- 5: Sensor
- 6: Anzeigeeinheit
- 7: grafisches Element
- 8: Achse
- 9: numerisches Fenster
- 10: numerischer Wert
- 11: (ortsfeste und zeitlich konstante) Markierungen
- 12: Offenstellung
- 13: Schließstellung
- 14: Mikroprozessor 14
- 15: Darstellung 15 des grafischen Elements 7
- 16: nicht-flüchtiger Speicher
- 17: aktuelle Darstellung 17 des grafischen Elements 7
- 18: flüchtiger Speicher
- 19: gedrehte Darstellung
- 20: weiteres grafisches Element
- 21: Teilmarkierung
- 22: Teilmarkierung
- 23: weiteres grafisches Element
- T, L: Abschaltart in der jeweiligen Endlage
- S1: Initialisierungsschritt
- S2: Anfangsschritt S2
- S3: Berechnungsschritt
- S4: Darstellungsschritt

## Patentansprüche

1. Verfahren zur Anzeige einer Stellposition eines Stellantriebs (1), bei dem ein grafisches Element (7) an einer Anzeigeeinheit (6) korrespondierend zur Stellposition angezeigt wird, **dadurch gekennzeichnet, dass** das grafische Element (7) zur Anzeige der Stellposition um eine Achse (8) gedreht angezeigt wird und dass das grafische Element (7) vor der Anzeige in einen flüchtigen Speicher (18) geladen wird, wobei im flüchtigen Speicher (18) eine gedrehte Position des grafischen Elements (7) korrespondierend zur Stellposition erzeugt wird.

2. Verfahren nach einem der vorangehenden Ansprüche, **dadurch gekennzeichnet, dass** die Anzeige an einem Flüssigkristallbildschirm ausgeführt wird.

3. Verfahren nach einem der vorangehenden Ansprüche, **dadurch gekennzeichnet, dass** ein verfügbarer Stellweg auf einen Drehwinkel von 90° abgebildet wird.

4. Verfahren nach einem der vorangehenden Ansprüche, **dadurch gekennzeichnet, dass** das grafische Element (7) eine 180°-Symmetrie aufweist.

5. Verfahren nach einem der vorangehenden Ansprüche, **dadurch gekennzeichnet, dass** in Abhängigkeit einer Kennzeichnung von Endlagen des Stellwegs als geschlossene oder offene Ventilstellung die Anzeige automatisch mit einem Offset von 90° oder mit einem umgekehrten Drehsinn des grafischen Elements (7) erfolgt.

6. Verfahren nach einem der vorangehenden Ansprüche, **dadurch gekennzeichnet, dass** ein weiteres grafisches Element (20, 23) angezeigt wird, mit dem eine Bewegung über eine Endlage des Stellwegs hinaus anzeigbar ist (22), insbesondere mit einer abweichenden Auflösung und/oder als ein momentanes Drehmoment des Stellantriebs (1).

7. Anzeigeeinheit für einen Stellantrieb (1) mit Mitteln zur Ausführung eines Verfahrens nach einem der vorangehenden Ansprüche.

8. Anzeigeeinheit (6) nach Anspruch 7, **gekennzeichnet durch** einen Mikroprozessor (14) und einen flüchtigen Speicher (18), wobei der Mikroprozessor (14) zur Berechnung einer gedrehten Darstellung (19) eines grafischen Elements (7) in Abhängigkeit von einer momentanen Stellposition des Stellantriebs (1) und zur Bereitstellung des gedrehten grafischen Elements (7), vorzugsweise in dem flüchtigen Speicher (18), insbesondere für eine Anzeige an der Anzeigeeinheit (6), eingerichtet ist.

9. Stellantrieb (1) mit einer Anzeigeeinheit (6) nach einem der Ansprüche 7 oder 8 und/oder mit Mitteln zur Ausführung eines Verfahrens nach einem der Ansprüche 1 bis 6.

## Claims

1. Method for indicating an actuating position of an actuator (1), in which a graphic element (7), which corresponds to the actuating position, is displayed on a display unit (6), **characterized in that** the graphic element (7) is displayed rotated about an axis (8) to indicate the actuating position and **in that** the graphic element (7) is loaded in a volatile memory (18) prior to being displayed, wherein a rotated position of the graphic element (7), which corresponds to the actuating position, is generated in the volatile memory (18).

2. Method according to one of the preceding claims, **characterized in that** the display is realized on a liquid crystal display.

3. Method according to one of the preceding claims, **characterized in that** an available actuating path is mapped to a rotation angle of 90°.

4. Method according to one of the preceding claims, **characterized in that** the graphic element (7) has a 180° symmetry.

5. Method according to one of the preceding claims, **characterized in that**, according to a designation of end positions of the actuating path as a closed or open valve position, the graphic element (7) is automatically displayed with an offset of 90° or with a reversed direction of rotation.

6. Method according to one of the preceding claims, **characterized in that** a further graphic element (20, 23) is displayed, by means of which a movement beyond an end position of the actuating path may be indicated (22), in particular by a difference in the resolution and/or as a current torque of the actuator (1).

7. Display unit for an actuator (1) having means for implementing a method according to one of the preceding claims.

8. Display unit (6) according to Claim 7, **characterized by** a microprocessor (14) and a volatile memory (18), wherein the microprocessor (14) is designed to calculate a rotated representation (19) of a graphic element (7) according to a current actuating position of the actuator (1) and to provide the rotated graphic element (7), preferably in the volatile memory (18), in particular for display on the display unit (6).

9. Actuator (1) having a display unit (6) according to one of Claims 7 and 8 and/or having means for implementing a method according to one of Claims 1 to 6.

## Revendications

1. Procédé d'affichage d'une position d'actionnement d'un servomoteur (1) selon lequel un élément graphique (7) est affiché sur une unité d'affichage (6) d'une façon correspondant à la position d'actionnement, **caractérisé en ce que** l'élément graphique (7) pour afficher la position d'actionnement est représenté tourné autour d'un axe (8) et que cet élément graphique (7) est chargé dans une mémoire volatile (18) avant l'affichage, une position tournée de l'élément graphique (7) correspondant à la position d'actionnement étant générée dans la mémoire volatile (18).

2. Procédé selon une des revendications précédentes, **caractérisé en ce que** l'affichage est effectué sur un écran à cristaux liquides.

3. Procédé selon une des revendications précédentes, **caractérisé en ce qu'**une course d'actionnement disponible est représentée sur un angle de rotation de 90°.

4. Procédé selon une des revendications précédentes, **caractérisé en ce que** l'élément graphique (7) présente une symétrie à 180°.

5. Procédé selon une des revendications précédentes, **caractérisé en ce qu'**en fonction d'un marquage des positions finales de la course d'actionnement comme position de vanne fermée ou ouverte, l'affichage se fait avec un décalage de 90° ou avec un sens de rotation inverse de l'élément graphique (7).

6. Procédé selon une des revendications précédentes, **caractérisé en ce qu'**est affiché un autre élément graphique (20, 23) avec lequel un déplacement au-delà d'une position finale de la course d'actionnement peut également être affiché, en particulier avec une résolution différente et/ou comme un couple de rotation instantané de l'entraînement du servomoteur (1).

7. Unité d'affichage pour un servomoteur (1) avec des moyens pour la mise en oeuvre d'un procédé selon une des revendications précédentes.

8. Unité d'affichage (6) selon la revendication 7, **caractérisée par** un microprocesseur (14) et une mémoire volatile (18), dans laquelle le microprocesseur (14) est adapté pour calculer une représentation tournée (19) d'un élément graphique (7) en fonction d'une position d'actionnement instantanée du servomoteur (1) et pour générer l'élément graphique (7) tourné, de préférence dans la mémoire volatile (18), en particulier pour un affichage sur l'unité d'affichage (6).

9. Servomoteur (1) avec une unité d'affichage (6) selon une des revendications 7 ou 8 et/ou avec des moyens pour la mise en oeuvre d'un procédé selon une des revendications 1 à 6.
